# EUROPÄISCHE PATENTSCHRIFT

(11) **EP 1 479 720 B1**
(45) Veröffentlichungstag und Bekanntmachung des Hinweises auf die Patenterteilung: **15.03.2006**
(21) Anmeldenummer: 04008999.7
(22) Anmeldetag: 15.04.2004
(51) Int. Cl.: C08K 5/57, C08G 77/08, C08K 5/5419, C08K 5/544

(54) **Verfahren zur Herstellung von vernetzbaren Massen auf der Basis von Organosiliciumverbindungen**
Process for preparing crosslinkable compositions of organosilicon compounds
Procédé de fabrication de compositions réticulables de composés organosiliciques

(30) Priorität: 29.04.2003 DE 10319303
(43) Veröffentlichungstag der Anmeldung: 24.11.2004
(73) Patentinhaber: Wacker Chemie AG, 81737 München (DE)
(72) Erfinder: Sixt, Torsten, Dr., 84561 Mehring (DE); Neuhauser, Franz, 5132 Geretsberg (AT)
(74) Vertreter: Budczinski, Angelika

(56) Entgegenhaltungen:
- EP-B- 0 495 298
- EP-B- 0 553 143
- EP-B- 0 657 517
- DE-A- 4 415 396
- US-A- 5 969 075
- US-B1- 6 254 811

## Beschreibung

Die Erfindung betrifft ein Verfahren zur Herstellung von unter Abspaltung von Alkoholen zu Elastomeren vernetzbare Massen, sogenannten RTV-1-Massen, unter Verwendung von hydroxyterminierten Polydiorganosiloxanen.

Verfahren zur Herstellung von bei Raumtemperatur bei Zutritt von Wasser vernetzbaren Massen sind seit langem bekannt. Typischerweise enthalten solche Massen im wesentlichen Organopolysiloxane mit mindestens zwei hydrolysierbaren Resten, wie Alkoxygruppen, Vernetzer mit mindestens drei hydrolysierbaren Resten, wie Alkoxygruppen, und Katalysatoren, wie etwa Organozinnverbindungen. Die als Basispolymere eingesetzten endblockierten Siloxane werden dabei durch sog. "Endcapping" hergestellt.

Endcapping ist für die Herstellung von unter Abspaltung von Alkoholen vernetzbare RTV-1-Massen essentiell. Das Endcapping kann auf mehrere Wege geschehen: 1) direktes Compoundieren mit OH-endständigen Organopolysiloxanen und Titan-Katalysatoren; 1.1) In-situ-endcapping mit Orthophosphorsäureestern in Verbindung mit Kreide, wie z.B. in DE-C-19507416 beschrieben; 1.2) In-situ-endcapping von OH-endständigen Organopolysiloxanen unter Verwendung von (Alkoxy)Si-N-Verbindungen und Kombinationen von Lewissäuren und Aminverbindungen, wie z.B. in EP-A-137883 beschrieben; 1.3) In-situ-endcapping unter Verwendung von Trialkoxysilanen und Carboxamiden oder deren Salz, wie z.B. in EP-A-304701 offenbart; im Anschluss daran werden die Massen weiterkompoundiert.
2) Separates Herstellen von Sonderpolymeren, die endgestoppert sind.
3) Compoundieren von mit Hydroxygruppen terminierten Organopolysiloxanen mit Alkoxysil(ox)an und festen Katalysatoren bei erhöhter Temperatur die anschließend entfernt werden, wie z.B. in US-A-3,383,355 beschrieben.

In US-A 6,254,811 wird die Herstellung einer niedermoduligen Masse beschrieben, die keinen Weichmacherzusatz benötigt. Es werden dazu Dialkoxysilane mit Tri/tetraalkoxysilanen gemischt und mit dem OH-Polymer unter Katalyse mit Phosphonsäure umgesetzt, wobei die Basispolymere gemischt endblockiert werden und ein monoalkoxy-funktionalisiertes Siloxan entsteht (gebundene Weichmacher), das nicht mehr weiterreagiert.

Gegenstand der vorliegenden Erfindung ist ein Verfahren zur Herstellung von unter Abspaltung von Alkoholen zu Elastomeren vernetzbaren Massen, dadurch gekennzeichnet, dass
(A) mindestens zwei Hydroxylgruppen aufweisendes Organopolysiloxan,
(B) Silane der Formel

   RSi(OR¹)₃ (I),

   wobei R gleich Methyl- oder Vinylrest bedeutet und R¹ gleich oder verschieden sein kann und die Bedeutung von Methyl- oder Ethylrest hat,
   und/oder deren Teilhydrolysate, mit der Maßgabe, dass Silane der Formel (I) und/oder deren Teilhydrolysate in Mengen von mindestens 0,7 Gewichtsteilen, bezogen auf 100 Gewichtsteile Komponente (A), eingesetzt werden,
(C) Organosiliciumverbindung mit mindestens einem über Kohlenstoff an Silicium gebundenen, basischen Stickstoff aufweisenden Rest,
(D) Zinnkatalysator,
   gegebenenfalls
(E) Füllstoffe,
   gegebenenfalls
(F) Stabilisatoren und
   gegebenenfalls
(G) weitere Stoffe,
   miteinander vermischt werden, wobei (A) und (B) unter Abspaltung von Alkanol ein Reaktionsprodukt bilden, mit der Maßgabe, dass

Zinnkatalysator (D) erst dann zur Bestandteil (A) bzw. dessen Reaktionsprodukt enthaltenden Mischung hinzugefügt wird, wenn 20 bis 60 % der ursprünglich vorhandenen Si-OH-Gruppen vorliegen.

Bei Komponente (A) handelt es sich bevorzugt um im wesentlichen lineare, mit Hydroxylgruppen terminierte Organopolysiloxane, besonders bevorzugt um solche der Formel

HO-[R²₂SiO]ₘ-H (II),

wobei R² gleich oder verschieden sein kann und einen gegebenenfalls substituierten Kohlenwasserstoffrest bedeutet und m so gewählt wird, dass das Organopolysiloxan (A) bei 25°C eine Viskosität von 100 bis 1 000 000 mPas, insbesondere 500 bis 250 000 mPas, aufweist.

Bevorzugt handelt es sich bei Rest R² um Alkylgruppen mit 1 bis 6 Kohlenstoffatomen, besonders bevorzugt um den Methylrest.

Bevorzugt handelt es sich bei Komponente (B) um Vinyltrimethoxysilan.

Zur erfindungsgemäßen Herstellung der vernetzbaren Massen wird Komponente (B) in Mengen von bevorzugt mindestens 1 Gewichtsteil, besonders bevorzugt 1,5 bis 8,5 Gewichtsteilen, jeweils bezogen auf 100 Gewichtsteile Komponente (A), eingesetzt.

Bei Komponente (C) handelt es sich bevorzugt um Organosiloxane und Organosilane mit mindestens einem über Kohlenstoff an Silicium gebundenen, basischen Stickstoff aufweisenden Rest, wobei Aminosilane, wie γ-Aminopropyltrimethoxysilan, Aminomethyltriethoxysilan und γ-Ethylenamino-propylaminotrimethoxysilan besonders bevorzugt sind.

Bei dem erfindungsgemäßen Verfahren wird Komponente (C) in Mengen von bevorzugt 0,5 bis 8,0 Gewichtsteilen, besonders bevorzugt 1,5 bis 5,5 Gewichtsteilen, jeweils bezogen auf 100 Gewichtsteile Siloxan A, eingesetzt.

Bei Komponente (D) handelt es sich bevorzugt um Organozinnverbindungen, wie z.B. Di-n-butylzinndiacetat, Di-n-butylzinnoktoat, Di-n-butylzinndilaurat oder Di-n-butylzinnoxid sowie deren Umsetzungsprodukte mit (Poly-)Alkoxysilanen, wobei diese Umsetzungskatalysatoren besonders bevorzugt sind.

Bei dem erfindungsgemäßen Verfahren wird Komponente (D) in Mengen von bevorzugt 0,01 bis 3,0 Gewichtsteilen, besonders bevorzugt 0,01 bis 1,0 Gewichtsteilen, insbesondere 0,05 bis 0,5 Gewichtsteilen, jeweils bezogen auf 100 Gewichtsteile vernetzbare Masse, eingesetzt.

Bei dem erfindungsgemäßen Verfahren können als Füllstoffe (E) alle Füllstoffe eingesetzt werden, die auch bisher zur Bereitung von RTV-1-Massen eingesetzt worden sind. Beispiele für Füllstoffe (E) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver, sowie verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche, sowie faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Falls Füllstoffe (E) eingesetzt werden, handelt es sich bevorzugt um pyrogene Kieselsäure, gecoatete oder ungecoatete Calciumcarbonate, Metallsilikate, Quartz oder Ruße.

Falls zur erfindungsgemäßen Herstellung der vernetzbaren Massen Füllstoffe (E) eingesetzt werden, was bevorzugt ist, handelt es sich um Mengen von vorzugsweise 10 bis 35 Gewichtsteile, besonders bevorzugt 15 bis 30 Gewichtsteile, jeweils bezogen auf 100 Gewichtsteile vernetzbare Masse.

Bei dem erfindungsgemäßen Verfahren können als Stabilisatoren (F) alle Stabilisatoren eingesetzt werden, die auch bisher zur Bereitung von RTV-1-Massen eingesetzt worden sind. Beispiele für Stabilisatoren sind Phosphorverbindungen in allen Oxidationsstufen.

Bevorzugt handelt es sich bei Komponente (F) um Phosphorverbindungen, wie Phosphorsäuremonoester, Phosphorsäurediester oder Phosphonsäuren, besonders bevorzugt Octylphosphonsäure.

Falls zur erfindungsgemäßen Herstellung der vernetzbaren Massen Stabilisatoren (F) eingesetzt werden, was bevorzugt ist, handelt es sich um Mengen von vorzugsweise 0,05 bis 2,0 Gewichtsteile, besonders bevorzugt 0,1 bis 0,4 Gewichtsteile, jeweils bezogen auf 100 Gewichtsteile vernetzbare Masse.

Bei den gegebenenfalls eingesetzten weiteren Stoffen (G) handelt es sich um Weichmacher, wie z.B. bei Raumtemperatur flüssige, durch Trimethylsiloxygruppen endblockierte Dimethylpolysiloxane, insbesondere mit Viskositäten im Bereich zwischen 50 und 1000 mPa.s, sowie hochsiedende Kohlenwasserstoffe, wie zum Beispiel Paraffinöle, und Additive, wie Pigmente, Farbstoffe, Riechstoffe, Fungicide, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, und organische Lösungsmittel, wie Alkylaromaten.

Falls zur erfindungsgemäßen Herstellung der vernetzbaren Massen weitere Stoffe (G) eingesetzt werden, handelt es sich um Mengen von vorzugsweise 0,1 bis 20 Gewichtsteilen, bezogen auf 100 Gewichtsteile vernetzbare Masse.

Die im erfindungsgemäßen Verfahren eingesetzten Komponenten sind handelsübliche Produkte bzw. sind in der Chemie nach gängigen Verfahren herstellbar.

Bei den im erfindungsgemäßen Verfahren eingesetzten Komponenten kann es sich jeweils um eine Art einer solchen Komponente wie auch um ein Gemisch aus mindestens zwei verschiedenen Arten derartiger Komponenten handeln.

Zur erfindungsgemäßen Bereitung der vernetzbaren Massen können alle Bestandteile in beliebiger Reihenfolge miteinander vermischt werden, mit der Maßgabe, dass Zinnkatalysator (D) erst dann zur Bestandteil (A) bzw. dessen Reaktionsprodukt enthaltenden Mischung hinzugefügt wird, wenn 20 bis 60 %, bevorzugt 20 bis 50%, besonders bevorzugt 20 bis 45, der ursprünglich vorhandenen Si-OH-Gruppen vorliegen. Dieses Vermischen erfolgt bevorzugt bei Temperatur von 20 bis 90°C, besonders bevorzugt 30 bis 70°C, insbesondere bei einer Temperatur, die sich beim Zusammengeben der Reaktanden bei Raumtemperatur ohne zusätzliche Heizung oder Kühlung einstellt, und dem Druck der umgebenden Atmosphäre, also etwa 900 bis 1100 hPa. Falls erwünscht, kann dieses Vermischen aber auch bei höheren oder niedrigen Drücken erfolgen, z.B. bei niedrigen Drücken zur Vermeidung von Gaseinschlüssen.

Bei einer bevorzugten Ausführungsform des erfindungsgemäßen Verfahrens wird Komponente (A), Komponente (B), Komponente (C), gegebenenfalls Füllstoffe (E) und gegebenenfalls weitere Stoffe (G) miteinander zu einer Vormischung vermischt und dann Katalysator (D) und gegebenenfalls Stabilisator (F) hinzugegeben, mit der Maßgabe, dass Zinnkatalysator (D) erst dann zur Vormischung hinzugefügt wird, wenn 20 bis 60 % der ursprünglich vorhandenen Si-OH-Gruppen vorliegen.

Bei einer besonders bevorzugten Ausführungsform des erfindungsgemäßen Verfahrens wird in der Reihenfolge Komponente (A), Komponente (C), Komponente (B), gegebenenfalls Füllstoffe (E) und gegebenenfalls weitere Stoffe (G) miteinander zu einer Vormischung vermischt und dann Katalysator (D) und gegebenenfalls Stabilisator (F) hinzugegeben, mit der Maßgabe, dass Zinnkatalysator (D) erst dann zur Vormischung hinzugefügt wird, wenn 20 bis 60 % der ursprünglich vorhandenen Si-OH-Gruppen vorliegen.

Die erfindungsgemäße Herstellung der vernetzbaren Massen und deren Lagerung muß unter im wesentlichen wasserfreien Bedingungen erfolgen, da ansonsten die Massen vorzeitig aushärten können.

Bevorzugt wird das erfindungsgemäße Verfahren unter Schutzgasatmosphäre, besonders bevorzugt unter Stickstoff, durchgeführt.

Die erfindungsgemäß hergestellten Massen können für alle Verwendungszwecke eingesetzt werden, für die unter Ausschluß von Wasser lagerfähige, bei Zutritt von Wasser bei Raumtemperatur zu Elastomeren vernetzende Massen eingesetzt werden können.

Die erfindungsgemäß hergestellten Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Dichtungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen. Ebenso können solche Massen im technischen Bereich wie der Abdichtung von Gehäusen, Steuergeräten, Anlagen- und Motorteilen, dem Verguss von Komponenten oder auch als Schutzcoating verwendet werden.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

### Beispiel 1

In einem Planetenmischer mit Vakuumausrüstung werden unter Wasserausschluss die in Tabelle 1 angegebene Menge an α,ω-Dihydroxypolydimethylsiloxan vorgelegt, Aminosilan und Vernetzer in den angegebenen Mengen homogen eingearbeitet; dann wird der Füllstoff in die Mischung eingearbeitet und die so erhaltene Vormischung wieder homogenisiert. Octylphosphonsäure sowie der Zinnkatalysator, der ein Reaktionsprodukt von Dibutylzinnacetat mit Tetraethylsilicat ist (käuflich erhältlich bei Wacker-Chemie GmbH, Deutschland unter der Bezeichnung "Katalysator 41"), werden dann der Vormischung zugegeben, wenn nur noch 47 % der ursprünglich vorhandenen Si-OH-Gruppen vorliegen. Nach Homogenisieren im Vakuum wird der so erhaltene Compound in feuchtigkeitsdichte Gebinde abgefüllt und nach der in Tabelle 2 angegebenen Lagerzeit vernetzen gelassen. Dazu wird der so erhaltene Compound in einer 2 mm dicken Schicht auf eine PE-Folie aufgebracht und bei 23°C und 50% relativer Luftfeuchtigkeit stehen gelassen. Die Vulkanisation wird als gut beurteilt, wenn nach 24 Stunden die Masse durchvulkanisiert ist.

Die Ergebnisse über das Vulkanisationsverhalten finden sich in Tabelle 2.

### Vergleichsbeispiel 1 (V1)

Die in Beispiel 1 angegebene Verfahrensweise wird wiederholt mit der Abänderung, dass die Zugabe des Katalysators bei einer Konzentration von 69% der anfänglichen Si-OH-Konzentration erfolgt.

Die Ergebnisse über das Vulkanisationsverhalten finden sich in Tabelle 2.

### Beispiel 2

Die in Beispiel 1 angegebene Verfahrensweise wird wiederholt mit der Abänderung, dass die in Tabelle 1 angegebenen Einsatzstoffe und Mengen angewendet werden und im Gegensatz zu Beispiel 1 die Zugabe des Katalysators bei einer Konzentration von 48% der anfänglichen Si-OH-Konzentration erfolgt.

Die Ergebnisse über das Vulkanisationsverhalten finden sich in Tabelle 2.

### Beispiel 3

Die in Beispiel 1 angegebene Verfahrensweise wird wiederholt mit der Abänderung, dass die in Tabelle 1 angegebenen Einsatzstoffe und Mengen angewendet werden und im Gegensatz zu Beispiel 1 die Zugabe des Katalysators bei einer Konzentration von 55% der anfänglichen Si-OH-Konzentration erfolgt.

Die Ergebnisse über das Vulkanisationsverhalten finden sich in Tabelle 2.

### Beispiel 4

Die in Beispiel 1 angegebene Verfahrensweise wird wiederholt mit der Abänderung, dass die in Tabelle 1 angegebenen Einsatzstoffe und Mengen angewendet werden und im Gegensatz zu Beispiel 1 die Zugabe des Katalysators bei einer Konzentration von 42% der anfänglichen Si-OH-Konzentration erfolgt.

Die Ergebnisse über das Vulkanisationsverhalten finden sich in Tabelle 2.

### Beispiel 5

Die in Beispiel 1 angegebene Verfahrensweise wird wiederholt mit der Abänderung, dass die in Tabelle 1 angegebenen Einsatzstoffe und Mengen angewendet werden und im Gegensatz zu Beispiel 1 die Zugabe des Katalysators bei einer Konzentration von 44% der anfänglichen Si-OH-Konzentration erfolgt.

Die Ergebnisse über das Vulkanisationsverhalten finden sich in Tabelle 2.

**Tabelle 1**

| Beispiel | 1 | 2 | 3 | 4 | 5 | V1 |
|---|---|---|---|---|---|---|
| α,ω-dihydroxypolydimethyl-siloxan 20.000 mPas | | 150g | 150g | 40g | 40g | |
| α,ω-dihydroxypolydimethyl-siloxan 80.000 mPas | | | | 80g | 80g | 150g |
| α,ω-dihydroxypolydimethyl-siloxan 6.000 mPas | 150g | | | | | |
| Vinyltrimethoxysilan | 8g | 8g | 4g | | | 8g |
| Methyltrimethoxysilan | | | | | 8g | |
| Vinyltriethoxysilan | | | 4g | 8g | | |
| N-aminoethyl-aminopropyl-triethoxysilan | 2g | 2g | 2g | 2g | 2g | 2g |
| Zinn katalysator | 0,2g | 0, 2g | 0,2g | 0,2g | 0, 2g | 0, 2g |
| Octylphosphonsäure | 0,5g | 0,5g | 0,5g | 0,5g | 0,5g | 0,5g |
| Pyrogene Kieselsäure¹⁾ | | 30g | 30g | 30g | 10g | |
| Aluminiumsilikat²⁾ | 50g | | | | 60g | 50g |
| Si-OH-Gehalt bei Zugabe des Katalysators bezogen auf die Anfangskonzentration | 47% | 48% | 55% | 42% | 44% | 69% |

| | | | | | | |
|---|---|---|---|---|---|---|
| 1) Pyrogene Kieselsäure mit einer BET-Oberfläche von 150 m²/g (käuflich erhältlich unter der Bezeichnung "Wacker HDK V15" bei der Wacker-Chemie GmbH, Deutschland); | | | | | | |
| 2) Aluminiumsilikat (käuflich erhältlich unter der Bezeichnung "Burgess Icecap K" bei Fa. Omya GmbH, Köln). | | | | | | |

**Tabelle 2**

| Vulkanisation | Nach Herstellung | Nach 1 Tag | Nach Wärmelagerung 3 Wochen bei 50°C |
|---|---|---|---|
| Beispiel 1 | gut | gut | gut |
| Beispiel 2 | gut | gut | gut |
| Beispiel 3 | gut | gut | gut |
| Beispiel 4 | gut | gut | gut |
| Beispiel 5 | gut | gut | gut |
| Vergleichsbeispiel V1 | verstrammt | | |

## Patentansprüche

1. Verfahren zur Herstellung von unter Abspaltung von Alkoholen zu Elastomeren vernetzbaren Massen, **dadurch gekennzeichnet, dass**
(A) mindestens zwei Hydroxylgruppen aufweisendes Organopolysiloxan,
(B) Silane der Formel
RSi(OR¹)₃ (I),
wobei R gleich Methyl- oder Vinylrest bedeutet und R¹ gleich oder verschieden sein kann und die Bedeutung von Methyl- oder Ethylrest hat,
und/oder deren Teilhydrolysate, mit der Maßgabe, dass Silane der Formel (I) und/oder deren Teilhydrolysate in Mengen von mindestens 0,7 Gewichtsteilen, bezogen auf 100 Gewichsteile Komponente (A), eingesetzt werden,
(C) Organosiliciumverbindung mit mindestens einem über Kohlenstoff an Silicium gebundenen, basischen Stickstoff aufweisenden Rest,
(D) Zinnkatalysator,
gegebenenfalls
(E) Füllstoffe,
gegebenenfalls
(F) Stabilisatoren und
gegebenenfalls
(G) weitere Stoffe,
miteinander vermischt werden, wobei (A) und (B) unter Abspaltung von Alkanol ein Reaktionsprodukt bilden, mit der Maßgabe, dass Zinnkatalysator (D) erst dann zur Bestandteil (A) bzw. dessen Reaktionsprodukt enthaltenden Mischung hinzugefügt wird, wenn 20 bis 60 % der ursprünglich vorhandenen Si-OH-Gruppen vorliegen.

2. Verfahren nach Anspruch 1, **dadurch gekennzeichnet, dass** es sich bei Komponente (A) um solche der Formel
HO- [R²₂SiO]ₘ-H (II)
handelt, wobei R² gleich oder verschieden sein kann und einen gegebenenfalls substituierten Kohlenwasserstoffrest bedeutet und m so gewählt wird, dass das Organopolysiloxan (A) bei 25°C eine Viskosität von 100 bis 1 000 000 mPas, insbesondere 500 bis 250 000 mPas, aufweist.

3. Verfahren nach einem oder mehreren der Ansprüche 1 bis 2, **dadurch gekennzeichnet, dass** Komponente (A), Komponente (B), Komponente (C), gegebenenfalls Füllstoffe (E) und gegebenenfalls weitere Stoffe (G) miteinander zu einer Vormischung vermischt und dann Katalysator (D) und gegebenenfalls Stabilisator (F) hinzugegeben werden, mit der Maßgabe, dass Zinnkatalysator (D) erst dann zur Vormischung hinzugefügt wird, wenn 20 bis 60 % der ursprünglich vorhandenen Si-OH-Gruppen vorliegen.

4. Verfahren nach einem oder mehreren der Ansprüche 1 bis 3, **dadurch gekennzeichnet, dass** in der Reihenfolge Komponente (A), Komponente (C), Komponente (B), gegebenenfalls Füllstoffe (E) und gegebenenfalls weitere Stoffe (G) miteinander zu einer Vormischung vermischt und dann Katalysator (D) und gegebenenfalls Stabilisator (F) hinzugegeben werden, mit der Maßgabe, dass Zinnkatalysator (D) erst dann zur Vormischung hinzugefügt wird, wenn 20 bis 60 % der ursprünglich vorhandenen Si-OH-Gruppen vorliegen.

## Claims

1. Process for the preparation of materials crosslinkable with elimination of alcohols to give elastomers, **characterized in that**
(A) an organopolysiloxane having at least two hydroxyl groups,
(B) silanes of the formula
RSi (OR¹)₃ (I),
in which R is a methyl or vinyl radical and R¹ may be identical or different and has the meaning of a methyl or ethyl radical,
and/or the partial hydrolysis products thereof, with the proviso that silanes of the formula (I) and/or the partial hydrolysis products thereof are used in amounts of at least 0.7 part by weight, based on 100 parts by weight of component (A),
(C) an organosilicon compound which has at least one radical bonded to silicon via carbon and comprising basic nitrogen,
(D) a tin catalyst,
optionally
(E) fillers,
optionally
(F) stabilizers and
optionally
(G) further substances
are mixed with one another, (A) and (B) forming a reaction product with elimination of alkanol, with the proviso that the tin catalyst (D) is added to the component (A) or the mixture containing the reaction product thereof only when from 20 to 60% of the Si-OH groups originally present are present.

2. Process according to Claim 1, **characterized in that** component (A) is a component of the formula
HO-[R²₂SiO]ₘ-H (II)
in which R² may be identical or different and is an optionally substituted hydrocarbon radical and m is chosen so that the organopolysiloxane (A) has a viscosity of from 100 to 1 000 000 mPa·s, in particular from 500 to 250 000 mPa·s, at 25°C.

3. Process according to one or more of Claims 1 to 2, **characterized in that** component (A), component (B), component (C), optionally fillers (E) and optionally further substances (G) are mixed with one another to give a premix and then catalyst (D) and optionally stabilizer (F) are added, with the proviso that tin catalyst (D) is added to the premix only when from 20 to 60% of the Si-OH groups originally present are present.

4. Process according to one or more of Claims 1 to 3, **characterized in that** component (A), component (C), component (B), optionally fillers (E) and optionally further substances (G) are mixed with one another in said sequence to give a premix and then catalyst (D) and optionally stabilizer (F) are added, with the proviso that tin catalyst (D) is added to the premix only when from 20 to 60% of the Si-OH groups originally present are present.

## Revendications

1. Procédé pour la préparation de masses réticulables en élastomères avec dissociation d'alcools, **caractérisé en ce qu'**on mélange
(A) un organosiloxane présentant au moins deux groupes hydroxyle
(B) des silanes de formule
RSi (OR¹)₃ (I),
où R signifie un radical méthyle ou vinyle et R¹ peut être identique ou différent et signifie un radical méthyle ou éthyle,
et/ou leurs hydrolysats partiels, à condition que les silanes de formule (I) et/ou leurs hydrolysats partiels soient utilisés en des quantités d'au moins 0,7 partie en poids, par rapport à 100 parties en poids de composant (A),
(C) un composé organosilicié comprenant au moins un radical présentant un azote basique, lié via du carbone au silicium,
(D) un catalyseur d'étain
le cas échéant
(E) des charges,
le cas échéant
(F) des stabilisateurs et
le cas échéant
(G) d'autres substances,
(A) et (B) formant un produit de réaction, en dissociant un alcanol, à condition que le catalyseur d'étain (D) ne soit ajouté au constituant (A) ou, selon le cas, au mélange contenant son produit de réaction qu'au moment où il existe 20 à 60% des groupements Si-OH présents au départ.

2. Procédé selon la revendication 1, **caractérisé en ce qu'**il s'agit, pour le composant (A) de ceux de formule
HO-[R²₂SiO]ₘ-H (II)
où R² peut être identique ou différent et signifie un radical hydrocarboné le cas échéant substitué et m est choisi de telle manière que l'organopolysiloxane (A) présente, à 25°C, une viscosité de 100 à 1 000 000 mPa.s, en particulier de 500 à 250 000 mPa.s.

3. Procédé selon l'une ou plusieurs des revendications 1 à 2, **caractérisé en ce que** le composant (A), le composant (B), le composant (C), le cas échéant les charges (E) et le cas échéant d'autres substances (G) sont mélangés ensemble en un prémélange, puis le catalyseur (D) et le cas échéant le stabilisateur (F) sont ajoutés, à condition que le catalyseur d'étain (D) ne soit ajouté au prémélange qu'au moment où il existe 20 à 60% des groupements Si-OH présents au départ.

4. Procédé selon l'une ou plusieurs des revendications 1 à 3, **caractérisé en ce que** sont mélangés en un prémélange, dans l'ordre, le composant (A), le composant (C), le composant (B), le cas échéant les charges (E) et le cas échéant d'autres substances (G) les uns avec les autres, puis le catalyseur (D) et le cas échéant le stabilisateur (F) sont ajoutés, à condition que le catalyseur d'étain (D) ne soit ajouté au prémélange qu'au moment où il existe 20 à 60% des groupements Si-OH présents au départ.
